(19)

**Europäisches Patentamt**
**European Patent Office**
**Office européen des brevets**

(11) **EP 4 787 019 A1**

(12) **EUROPEAN PATENT APPLICATION**

(43) Date of publication:
05.08.2026 Bulletin 2026/32

(51) International Patent Classification (IPC):
**G01S 13/933** (2020.01)   **G01S 13/02** (2006.01)

(21) Application number: 25275004.7

(22) Date of filing: **30.01.2025**

(52) Cooperative Patent Classification (CPC):
**G01S 13/933;** G01S 2013/0245

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Victory Point**
**Frimley**
**Camberley, Surrey GU16 7EX (GB)**

(54) **RADAR SYSTEM**

(57)     A RADAR system (100) comprising a surface-based platform (102) and an airborne platform (112). The surface-based platform comprises a phased array (104) of antennas; a surface-based communications interface (106) configured to communicate with the airborne platform, and at least one processor (108) configured to generate, based on position information communicated via the surface-based communications interface, control signals for the phased array to transmit a beam of radio waves towards a reflectarray (114) of the airborne platform, and to process reflected radio waves received via the phased array. The airborne platform comprises the reflectarray for receiving and directing the beam transmitted by the phased array and/or reflected from an object; an airborne communications interface (116) configured to communicate with the surface-based platform, and at least one processor (118) configured to output, based on position information communicated via the airborne communications interface, control signals for directing the reflectarray.

Fig. 1

## Description

FIELD OF THE INVENTION

The present invention relates to a RADAR system comprising a surface-based platform and an airborne platform.

BACKGROUND

Ground-based surveillance RADAR systems are range limited in detecting low flying targets due to the curvature of the Earth. The higher above the ground a RADAR is mounted, the further away it can see targets. However, airborne RADARs are expensive, heavy and difficult to keep flying continuously for extended periods. **[0003]** An existing solution to this technical problem is the use of tethered aerostat surveillance RADAR. In this case the RADAR array face is mounted on the aerostat, along with a power supply and RADAR control. RADAR signal processing facilities on the ground receive RADAR signals from the array via the tether. This allows the weight of the airborne portion of system to be reduced, but it remains significant and limits the size of such systems.

SUMMARY

Embodiments of the present invention can address one or more of the above technical problems. Embodiments can solve the technical problem of forming RADAR beams at altitude by using a surface-based phased array in conjunction with a reflectarray mounted on an airborne platform. Embodiments can reduce/minimise the complexity and weight of the airborne platform. **[0005]** According to a first aspect of the present invention there is provided a RADAR system comprising a surface-based platform and an airborne platform, wherein the surface-based platform comprises:

> a phased array of antennas;

> a surface-based communications interface configured to communicate with the airborne platform, and

> at least one processor configured to generate, based on position information communicated via the surface-based communications interface, control signals for the phased array to transmit a beam of radio waves towards a reflectarray of the airborne platform, and to process reflected radio waves received via the phased array,

wherein the airborne platform comprises:

> the reflectarray configured to receive and direct the beam transmitted by the phased array of the surface-based platform and/or reflected from an object,

an airborne communications interface configured to communicate with the surface-based platform, and

at least one processor configured to output, based on position information communicated via the airborne communications interface, control signals for directing the reflectarray.

The at least one processor of the surface-based platform may be configured to keep the beam transmitted by the phased array centred on the reflectarray of the airborne platform based on the position information. The at least one processor of the airborne platform may be configured to control the reflectarray to redirect the beam towards a specific area, direction or a target based on the position information.
The airborne platform may transmit (e.g. at regular intervals) the position information comprising position and orientation of the reflectarray to the surface-based platform. The processor(s) of the surface-based platform may receive and process the position and orientation information to calculate the control signals for the phased array beam and the control signals (e.g. steering angles commands) for the reflectarray, and transmit, via the surface-based communications interface, the control signals for the reflectarray as the position information to the airborne platform.
Alternatively, the surface-based platform may transfer, via the surface-based communications interface, the position information comprising a request for beam position (e.g. in world coordinates) to the airborne platform. The at least one processor of the airborne platform may compute and output the control signals (e.g. steering angle commands) for the reflectarray corresponding to the beam position of the request included in the position information.
Alternatively, the at least one processor of the airborne platform may control beam positioning of the reflectarray in space (e.g. in accordance with a pre-set surveillance pattern) and may transmit, via the airborne communications interface, the position information comprising the beam positioning of the reflectarray, to the surface-based platform. The at least one processor of the surface-based platform may use that position information to generate the control signals for the phased array to continue to direct the beam towards the reflectarray.
The reflectarray may be formed as an active periodic surface of the airborne platform, or as an array of Digital Radio Frequency Memory-like modules arranged on the airborne platform. The reflectarray can be planar (e.g. mounted within a radome either protruding from or within an RF transparent section of the airborne platform), or may be conformal with at least part of a skin/outer surface of the airborne platform.
The surface-based platform may comprise a building or static structure. Alternatively, the surface-based platform may be mounted in or on a mobile vehicle, such as a ship or overland transporter.

The airborne platform may comprise an aerostat/airship (tethered or free-flying), an aircraft, a drone, a drone swarm or an orbital satellite. In embodiments where the airborne platform comprises a drone swarm, the reflectarray may be distributed across the drone swarm.

The at least one processor of the surface-based platform may be configured to process the reflected radio waves received via the phased array to perform surveillance, object tracking, jamming and/or other RADAR-based activity.

According to another aspect of the invention there is provided a surface-based platform of a RADAR system comprising the surface-based platform and an airborne platform, the surface-based platform comprising:

a phased array of antennas;

a surface-based communications interface configured to communicate with the airborne platform, and

at least one processor configured to process reflected radio waves received via the phased array, and to generate, based on position information communicated via the surface-based communications interface, control signals for the phased array to transmit a beam of radio waves towards a reflectarray of the airborne platform.

According to another aspect of the invention there is provided an airborne platform of a RADAR system comprising the airborne platform and a surface-based platform, the airborne platform comprising:

a reflectarray configured to receive and direct a beam of radio waves transmitted by a phased array of the surface-based platform and/or reflected from an object;

an airborne communications interface configured to communicate with the surface-based platform, and

at least one processor configured to output, based on position information communicated via the airborne communications interface, control signals for directing the reflectarray.

According to another aspect of the present invention there is provided a structure or vehicle comprising a surface-based platform substantially as described herein. According to yet another aspect of the present invention there is provided an airborne vehicle comprising an airborne platform substantially as described herein.

According to another aspect of the present invention there is provided a computer-implemented method substantially as described herein of operating a RADAR system comprising a surface-based platform and an airborne platform. The method may comprise:

communicating position information between the surface-based platform and the airborne platform;

generating, by the surface-based platform based on the position information, control signals for a phased array of antennas to transmit a beam of radio waves towards a reflectarray of the airborne platform;

receiving, at the reflectarray of the airborne platform, the beam transmitted from the phased array of the surface-based platform;

outputting, by the airborne platform based on the position information, control signals for directing the reflectarray;

directing the received beam from the reflectarray of the airborne platform, e.g. towards an object;

receiving, at the reflectarray of the airborne platform, a reflected beam reflected from an object and directing the reflected beam back towards the phased array of the surface-based platform;

receiving, at the phased array of the surface-based platform, the reflected beam, and

performing processing, by at least one processor of the surface-based platform, based on the reflected beam.

According to yet another aspect of the present invention there is provided a method of operating a surface-based platform of a RADAR system comprising the surface-based platform and an airborne platform, the method comprising:

communicating position information between the surface-based platform and the airborne platform;

generating, based on the position information, control signals for a phased array of antennas to transmit a beam of radio waves towards a reflectarray of the airborne platform;

receiving, at the phased array, a reflected beam, and

performing processing based on the reflected beam.

According to yet another aspect of the present invention there is provided a method of operating an airborne platform of a RADAR system comprising the airborne platform and a surface-based platform, the method comprising:

communicating position information between the surface-based platform and the airborne platform;

receiving, at a reflectarray of the airborne platform, a beam transmitted from a phased array of the surface-based platform;

outputting, by the airborne platform based on the position information, control signals for directing the reflectarray;

directing the received beam from the reflectarray of the airborne platform;

receiving, at the reflectarray of the airborne platform, a reflected beam reflected from an object, and

directing the reflected beam back towards the phased array of the surface-based platform.

According to a further aspect of the present invention there is provided a computer readable medium, or circuit, storing computer programs to operate methods substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

BRIEF DESCRIPTION OF THE DRAWINGS

Embodiments of the invention will now be described by way of example only and with reference to the accompanying drawings:

Figure 1 is a block diagram of an example RADAR system according to an embodiment; and

Figures 2 - 4 graphically illustrate various examples of communication and RADAR activity between surface-based and airborne platforms of the RADAR system.

DETAILED DESCRIPTION

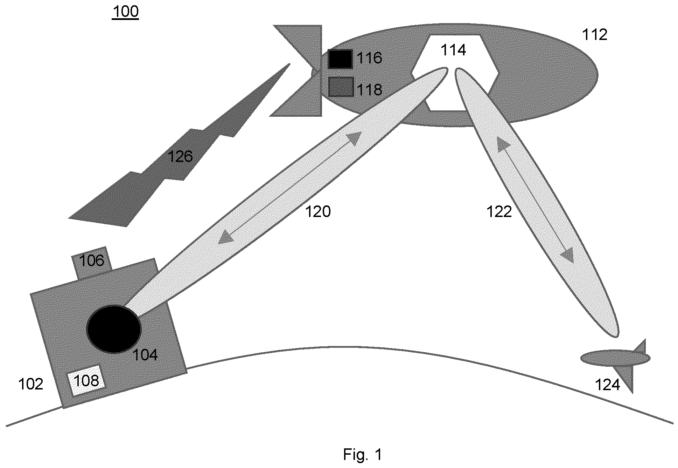

Figure 1 is a simplified block diagram of an example RADAR system 100. The system comprises a surface-based platform 102 and at least one airborne platform 112.

The surface-based platform 102 can comprise, or is mounted in/on, a fixed installation, such as a building or other static structure, or may be mounted in or on a mobile/portable body, including a vehicle, such as a ship or overland transporter. In some embodiments the surface-based platform can be responsible for all signal and waveform generation and track and display tasks, along with producing a beam containing sufficient RF power to perform air defence and/or Ballistic Missile Defence tasks in some cases.

The surface-based platform 102 typically comprises at least one active phased array 104 capable of generating, transmitting and receiving radio waves. In a phased array, the power from a transmitter is fed to radiating elements through analogue or digital phase shifters that can alter the phase or signal delay based on commands/control signals from a controller, e.g. a processor, to steer a beam of radio waves in a desired direction. The active phased array can steer a pencil beam in both azimuth and elevation. It may comprise a Multi-Function RADAR (or Active Electronically Scanned Array). One example of a suitable array is the AN/SPY-1, which is a United States Navy passive electronically scanned array (PESA) 3D radar system manufactured by Lockheed Martin, although it will be understood that alternatives can be used. In embodiments, the beam will typically be directed towards a reflectarray of the airborne platform 112.

The surface-based platform 102 further includes a communication interface 106 configured to exchange position information with the airborne platform. The communications interface 106 provides data communication between the surface-based and airborne platforms via a wireless connection. Embodiments can use any suitable communications link(s), preferably one(s) with low latency, such as a point-to-point dedicated link. Other embodiments may use alternatives, including a secure cellular network or communications satellites, such as Starlink™ or the UK Skynet™. The platform 102 further includes, or is in communication with, at least one processor 108. The at least one processor can be configured to process the position information, e.g. in order to directly or indirectly generate control signals/commands for the phased array 104 and/or the reflectarray 114. The processor(s) can also perform object tracking and/or any other suitable processing using reflected RADAR beams received via the phased array 104 in a conventional manner.

The at least one processor 108 may be part of a computing device (not shown) located in/on the surface-based platform 102 (or in communication with it) that comprises, or is associated with, additional conventional components, such as a memory, interface, etc. The at least one processor 102 may comprise one or more of: a microprocessor, a microcontroller and an integrated circuit. The memory may comprise volatile memory, such as random access memory (RAM), for use as temporary memory, and/or non-volatile memory, such as Flash, read only memory (ROM), or electrically erasable programmable ROM (EEPROM), for storing data, programs, or instructions, for example. Other components and features of the computing device, such as a housing, power source/supply, display, etc, will be well-known to the skilled person and need not be described herein in detail. More than one computing device in communication with each other may be used in some embodiments. For example, one or more of the steps of the methods described herein may be performed by a remote computing device, such as a server or a cloud service, that may be in communication with the processor(s) 108. The processor(s) can process data communicated via the communications interface 106.

The airborne platform(s) 112 can comprise any suitable airborne platform(s). The position(s) of the airborne platform(s) can be controlled fully or partially autonomously, and/or by a human operator. The controller may be located onboard and/or remotely. A non-exhaustive list of examples of suitable platforms includes: an aerostat/airship (tethered or free-flying), an aircraft, a drone, a drone swarm or an orbital satellite.

The airborne platform 112 includes at least one relfectarray 114 (a class of antenna known as Reflective Array Antennas). Active reflectarrays are periodic structures that allow the phase of any reflected electromagnetic energy to be manipulated on a cell-by-cell basis across the surface of the reflector. This allows reflected energy to be shaped and directed in the same way that an active phased array antenna forms a shaped beam in a given direction. In embodiments the reflectarray can be constructed as either an active periodic surface of the platform or as an array of Digital Radio Frequency Memory-like modules, depending on the desired level of performance. The reflectarray can be either planar (e.g. mounted within a radome either protruding from or within an RF transparent section of the airborne structure) or conformal with at least part of the skin/outer surface of the airborne platform, e.g. covering part of the outer skin of an aerostat. In use, the reflectarray can receive and direct the beam transmitted by the phased array 104 of the surface-based platform 102 for beam scanning and beam shaping. In some embodiments, there may be a plurality of reflectarrays located on different (e.g. opposing) surfaces of the airborne platform to maximise visibility with respect to the phased array. Typically, the beam will be directed from the reflectarray towards coordinates associated with a target or for seeking a target.

The airborne platform 112 can further comprise a communications interface 116 configured to exchange at least position information with the surface-based platform 102. The communications interface of the airborne platform is able to transfer data to/from the communications interface 106 of the surface-based platform 102. The airborne platform can further comprise, or be in communication with, at least one processor 118. The processor(s) may be configured to process position information transferred to/from the surface-based platform, and may be configured to output control signals/commands for directing the reflectarray 114. At least part of the above description of the at least one processor 108 of the surface-based platform, including it being part of a computing device, can also apply to the at least one processor 118 of the airborne platform.

In typical embodiments, the airborne platform 112 will remain substantially stationary with respect to the surface-based platform 102. However, in other embodiments the airborne platform may move, e.g. inherently in the case of it comprising an aeroplane or satellite. The surface-based platform can be provided (e.g. via the communications interfaces 106, 116 or user input) with position information comprising at least initial coordinates of the airborne platform and, optionally, information regarding its future movements/course. The movement of the airborne platform can be independent of the surface-based platform control system, provided that the airborne platform accurately reports its position and orientation. The airborne platform should also remain line-of-site visible to the surface-based platform, and a surface of the (or at least one of the) reflectarray(s) 114 of the airborne platform should remain visible to the phased array 104 of the surface-based platform.

In use, the phased array 104 of the ground-based platform 102 generates and transmits a beam 120 of radio waves towards the reflectarray 114 of the airborne platform 112, which reflects the beam 122 in a desired direction, e.g. towards a target 124. Herein, "target" refers to an object which it is desired to locate, identify or track, and does not necessarily mean a target in a military sense. The beam is reflected from the target back towards the reflectarray, which then reflects it back to the phased array of the ground-based platform. The processor(s) 108 of the ground-based platform can process data based on the reflected beam to perform one or more activity, such as object detection/tracking. The results of the one or more activity can be used for any suitable purpose, e.g. displaying a tracked object on a local or remote screen, transferring object detection information/coordinates to a remote system for further action, etc. The results of the processing may be used during the calculation of the position information, e.g. an updated position of a target may be used to update the direction of the beam of the reflectarray 114 and/or the phased array.

In order for the RADAR system 100 to behave substantially in the same way as a traditional mono-static RADAR, the spatial relationship of the reflectarray 114 with respect to both the ground-based platform 102 and the world should be well understood by the system. In this regard, the communications interfaces 106, 116 of the surface-based 102 and airborne 112 platforms provide a communications channel 126 that facilitates coordination of the reflectarray with the surface-based platform. Thus, the processor(s) 108 of the surface-based platform may generate control signals for the phased array 104 (and/or, in some cases, control signals for the reflectarray 114) based on position information that it transmits to, and/or position information received from, the airborne platform. The processor(s) 118 of the airborne platform may output control signals for directing the reflectarray based on position information that it transmits to, and/or position information received from, the surface-based platform. Examples of the different types of position information that can be generated and communicated between the platforms for operating embodiments of the RADAR system will now be described.

In a first example embodiment the airborne platform 112 can communicate position information in the form of a report of its position and orientation via the communications interfaces 116, 106 to the ground-based platform 102. The processor 108 of the ground-based platform can use the received position information to calculate control signals (e.g. beam steering angles) for its phased array 104, and also to calculate control signals (e.g. beam steering angles) for the reflectarray 114 that it can transmit back to the airborne platform for use by that platform's processor 118.

The position/orientation information can take the form of, for example, an absolute position (latitude/longitude/height) and a set of rotation angles (roll/pitch/yaw), which (coupled with detailed knowledge of the geometry of the platform, e.g. location(s) of the relflectarray(s) in/on its surface(s)) can define the current position and orientation of the reflectarray(s) carried by the airborne platform 112 in space.

Communication of position information between the surface-based platform 102 and the airborne platform 112 in any embodiment may take place periodically, on request and/or on an event-driven basis. For example, the position information in the first embodiment may be communicated from the airborne platform at regular intervals. The update rate may be coupled to the speed and manoeuvrability of the airborne platform. For instance, update rates can vary from once per coherent burst (every few milliseconds) to every second or so. For some airborne platforms (such as aircraft), it may be necessary to include velocity and even acceleration information in the position information (i.e. the first and possibly second derivative of (latitude/longitude/height), (roll/pitch/raw) with respect to time). It will be appreciated that alternative embodiments can use other coordinate systems.

The processor 108 of the ground-based platform 102 can use the received position information to calculate beam steering angles for its phased array 104 and also for the reflectarray 114 of the airborne platform. The calculations are typically based on knowing the position and orientation of the surface-based platform and the position and orientation of the airborne platform 112 in the same co-ordinate system, and deriving the differences between them (allowing for the offset of the position of the array 104 from the centre of rotation of the surface-based platform and the offset of the position of the reflectarray 114 from the centre of rotation of the airborne platform) and then converting to RADAR array face centric direction cosines (u,v) and range (or azimuth, elevation, range). The skilled person will appreciate that these calculations can be performed in various ways, depending on which coordinate systems are being used. For example, the following equation may be used:

$$(\mathbf{Pa} + \mathbf{Wa}.\mathbf{Oa}) - (\mathbf{Pr} + \mathbf{Wr}.\mathbf{Or})$$

where:

Pa is a vector describing the position of the centre of rotation of the airborne platform,
Wa is a vector describing the rotation angle cosines around the centre of rotation of the airborne platform,
Oa is a vector describing the offset position of the reflectarray face from centre of rotation of the airborne platform,
Pr is a vector describing the position of the centre of rotation of the surface-based platform,
Wr is a vector describing the rotation angle cosines around the centre of rotation of the surface-based platform, and
Or is a vector describing the offset position of the array from centre of rotation of the surface-based platform.

It will be appreciated that the above equation is a simplified example, and in alternative embodiments the calculations could also include the fact that, e.g. Pa is known for a given instance in time, and allowance needs to be made for its movement between then and the time when it will be illuminated with the RADAR beam, so:

$$\mathbf{Pat} = \mathbf{Pa} + dt.\mathbf{Va} + (1/2).\mathbf{Aa}.dt^2,$$

where:

Pat is the position at the time of transmission,
Va is the surface-based platform velocity vector,
Aa is the surface-based platform acceleration vector, and
dt is the time difference between the position update and the transmission time.

Similar statements can be made about all of the P's and W's variables above as it is not expected that the offsets will change with time. Information based on the results of the calculations performed by the processor(s) 108 of the surface-based platform 102 can be transmitted, via the communications interfaces 106, 116, as position information comprising control signals/commands for steering the reflectarray(s) 114 to direct the beam 122 in the desired direction to the airborne platform 112. The processor(s) 118 of the airborne platform can then output control signals based on the received position information to control the cells of its (or at least one of its) reflectarray(s) to direct the beam accordingly.

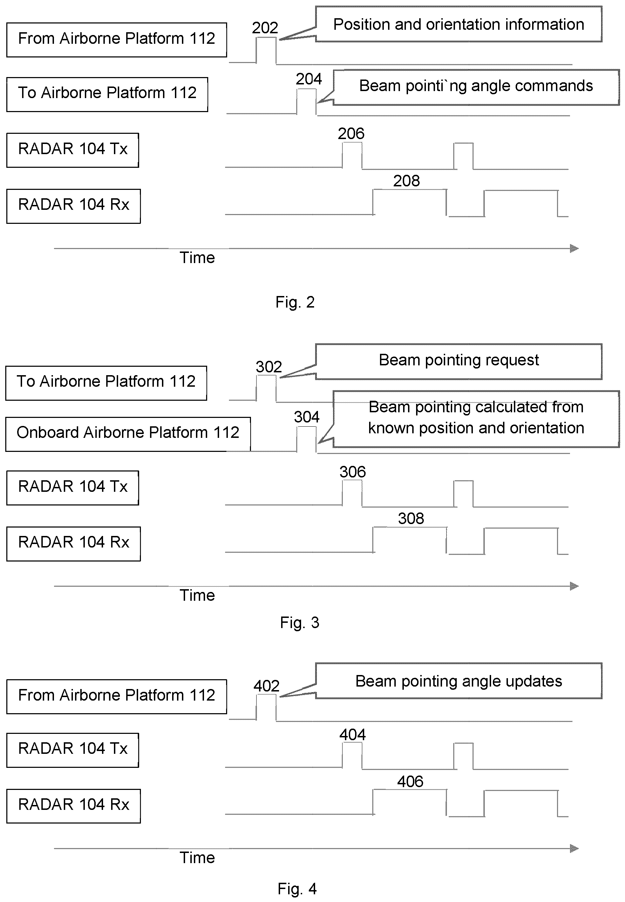

Figure 2 graphically illustrates example timings of position information communication and RADAR activity between the surface-based and airborne platforms in the case of the first embodiment. At step 202 the airborne platform 112 transmits the position information comprising its position and orientation to the surface-based platform 102. The processor 108 of the ground-based platform can use the received position information to calculate control signals for its phased array 104, and also to calculate control signals (e.g. beam steering angles) for the reflectarray 114. At step 204 the surface-based platform transmits the calculated control signals for the reflectarray the airborne platform as position information for use by that platform's processor 118. At step 206 the phased array 104 of the surface-based platform transmits the beam 120. This is received by the reflectarray 114 and redirected by it as beam 122 towards target 124, which reflects the beam back towards the reflectarray, which directs it back towards the phased array. At step 208 the phased array 104 receives the reflected beam from the reflectarray and the at least one processor 108 may process information based on it. The transmission/reflection of the beam may continue until the next interval/juncture when the airborne platform transmits updated position information to the surface-based platform, at which point control returns to step 202.

In a second example embodiment the surface-based platform 102 can, via the communications interfaces 106, 116, transmit position information comprising a request for a specific beam position/direction, e.g. in world coordinates, to the airborne platform 112, i.e. the position information comprises a request/instruction to point the beam 122 transmitted from the reflectarray 114 in a required direction in space, in absolute terms. For example, this could be done for activities such as surveillance (looking for new targets) or tracking (illuminating a known target). As in all embodiments, other activities, such as jamming or Electronic Attack, are also possible.

The processor 118 of the airborne platform 112 can calculate suitable beam steering angles for the one or more reflectarray 114 from its known position and orientation that satisfy the request in the received position information. This calculation can be similar to the one disclosed above and is also based on standard phased array beam steering phase calculations - the desired direction of the beam 122 from the reflectarray 114 is known in absolute coordinates, and that can be calculated as a steering offset from the reflectarray. The direction of arrival of the beam 120 from the phased array 104 of the surface-based platform 102 with respect to the reflectarray normal can also be obtained (e.g. included in the position information) or calculated in order to correct for illumination phases before re-transmitting/reflecting the beam from the reflectarray in the required direction.

Figure 3 graphically illustrates graphically illustrates example timings of position information communication and RADAR activity between the surface-based and airborne platforms in the case of the second embodiment. At step 302 the surface-based platform 102 transmits position information comprising a request for a specific beam position/direction to the airborne platform 112. At step 304 the processor 118 of the airborne platform can calculate suitable beam steering angles for its reflectarray(s) 114 that satisfy the request in the received position information. At step 306 the phased array 104 of the surface-based platform transmits the beam 120. This is received by the reflectarray 114 and redirected by it as beam 122 towards target 124, which reflects the beam back towards the reflectarray, which directs it back towards the phased array 104. At step 308 the phased array 104 receives the reflected beam from the reflectarray and the at least one processor 108 may process information based on it. The transmission/reflection of the beam may continue until the next interval/juncture when the surface-based platform provides a new request as position information to the airborne platform, at which point control returns to step 302.

In a third example embodiment the processor(s) 118 of the airborne platform 112 can control the beam positioning of the reflectarray(s) 114 in space (e.g. with a pre-set surveillance pattern, which may be transmitted as position information from the surface-based platform 102). The surface-based platform 102 may also have received initial position information from the airborne platform prior to commencing transmission of the beam 120. The airborne platform can report, via the communications interfaces 116, 106, position information comprising the beam 122 position back to the surface-based platform 102 as required. This position information can comprise steering angles relative to the reflectarray normal, e.g. (azimuth,elevation) or (u,v), given that the absolute positions and orientations of all of the elements of the RADAR system are known. The processors(s) 108 of the surface-based platform can then use that position information to calculate control signals that will continue to direct the beam 120 from the phased array 104 towards the reflectarray.

Figure 4 graphically illustrates example timings of position information communication and RADAR activity between the surface-based and airborne platforms in the case of the third embodiment. At step 402 the airborne platform 112 transmits position information comprising the position of the beam transmitted by its reflectarray(s) 114 to the surface-based platform 102. The processors(s) 108 of the surface-based platform can then use that position information to generate controls signal that continue to steer the beam 120 generated by its phased array 104 towards the reflectarray. At step 404 the phased array 104 transmits the beam 120. This is received by the reflectarray 114 and redirected by it as beam 122 towards target 124, which reflects the beam back towards the reflectarray, which directs it back towards the phased array. At step 406 the phased array 104 receives the reflected beam from the reflectarray and the at least one processor 108 may process information based on it. The transmission/reflection of the beam may continue until the next interval/juncture when the airborne platform provides updated position information to the surface-based platform, at which point control returns to step 402.

In embodiments where the airborne platform 112 comprises a swarm of drones, the reflectarray 114 can be distributed across the swarm. Each drone in the swarm can carry an individual element/cell (or a small number of elements) of the reflectarray such that the aggregate effect is the same as that of a reflectarray on a contiguous surface. In such embodiments it will be necessary to know the position of every drone to within a small fraction of a wavelength (sub mm in most useful cases), or for the drones themselves to know where they are with respect to a common reference point. The drones will also all have access to a common frequency reference (this being the fundamental concept of a phased array), and sufficient inter-drone communication to coordinate activities. Each drone may be equipped with an ultra-stable clock, which would both allow accurate inertial navigation and provide a timing source for frequency reference. One or more of the drones can be configured to communicate position information with the surface-based platform 102 and process the position information to direct the distributed reflectarray (e.g. by obtaining/generating control signals and transferring them to other drones in the swarm in some cases) in a similar manner to any of the other embodiments described above.

Assuming that the ground-based RADAR 104 is tracking the airborne platform 112 continuously in order to point its illumination beam 120 at the reflectarray 114 accurately; it could be assumed that it always has knowledge of the relative position of the airborne platform. It may not, however, be able to deduce the platform orientation accurately enough to be completely independent of information supplied by the platform itself. Embodiments of the present invention can provide ways of accurately steering the beams 120, 122 to maintain effective operation of the RADAR system 100.

It will be understood that embodiments can be implemented using any suitable software, programming language, data editors, etc, and may be represented/stored/processed using any suitable data structures. It will also be understood that the steps described herein as part of the detailed embodiments may be re-ordered, omitted and/or repeated. Additional steps may also be performed. Some steps may be performed concurrently instead of sequentially.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A RADAR system (100) comprising a surface-based platform (102) and an airborne platform (112),

    wherein the surface-based platform comprises:

        a phased array (104) of antennas;
        a surface-based communications interface (106) configured to communicate with the airborne platform, and
        at least one processor (108) configured to generate, based on position information communicated via the surface-based communications interface, control signals for the phased array to transmit a beam of radio waves towards a reflectarray of the airborne platform, and to process reflected radio waves received via the phased array,

wherein the airborne platform comprises:

the reflectarray (114) configured to receive and direct the beam transmitted by the phased array of the surface-based platform and/or reflected from an object;
an airborne communications interface (116) configured to communicate with the surface-based platform, and
at least one processor (118) configured to output, based on position information communicated via the airborne communications interface, control signals for directing the reflectarray.

2.  A RADAR system according to claim 1, wherein the at least one processor (108) of the surface-based platform (102) is configured to keep the beam (120) transmitted by the phased array centred on the reflectarray (114) of the airborne platform (112) based on the position information, and the at least one processor (118) of the airborne platform is configured to control the reflectarray to redirect the beam towards a specific area, direction or a target based on the position information.

3.  A RADAR system according to claim 1, wherein:

the airborne platform (112) is configured to transmit, via the airborne communications interface (116), the position information comprising position and orientation of the reflectarray (114) to the surface-based platform (102);
the at least one processor (108) of the surface-based platform is configured to process the position and orientation information to calculate the control signals for the phased array and the control signals for the reflectarray, and to transmit, via the surface-based communications interface (106), the control signals for the reflectarray as the position information to the airborne platform.

4.  A RADAR system according to claim 1, wherein:

the surface-based platform (102) is configured to transfer, via the surface-based communications interface (106), the position information comprising a request for beam positioning to the airborne platform (112), and
the at least one processor (118) of the airborne platform is configured to compute and output the control signals for the reflectarray (114) corresponding to the beam positioning of the request included in the position information.

5.  A RADAR system according to claim 1, wherein:

the at least one processor (118) of the airborne platform (112) is configured to control beam positioning of the reflectarray (114) and to transmit, via the airborne communications interface (116), the position information comprising the beam positioning of the reflectarray to the surface-based platform (102), and
wherein the at least one processor (108) of the surface-based platform is configured to process the position information to generate the control signals for the phased array (104) to continue to direct a beam (120) towards the reflectarray (114).

6.  A RADAR system according to any preceding claim, wherein the reflectarray (114) is formed as an active periodic surface of the airborne platform (112), or as an array of Digital Radio Frequency Memory modules arranged on the airborne platform (112).

7.  A RADAR system according to any of claims 1 to 5, wherein the reflectarray (114) is planar and mounted within a radome protruding from or within an RF transparent section of the airborne platform (112).

8.  A RADAR system according to any of claims 1 to 5, wherein the reflectarray (114) is conformal with at least part of a skin/outer surface of the airborne platform (112).

9.  A RADAR system according to any preceding claim, wherein the surface-based platform (102) is mounted in/on a building, a static structure or a mobile vehicle.

10. A RADAR system according to any preceding claim, wherein the airborne platform (112) comprises an aerostat/airship, an aircraft, a drone or an orbital satellite.

11. A RADAR system according to any of claims 1 to 9, wherein the airborne platform (112) comprises a drone swarm, and the reflectarray (114) is distributed across the drone swarm.

12. A RADAR system according to any preceding claim, wherein the at least one processor (108) of the surface-based platform (102) is configured to process the reflected radio waves received via the phased array (104) to perform surveillance, object tracking, jamming and/or other RADAR-based activity.

13. A surface-based platform (102) of a RADAR system (100) comprising the surface-based platform and an airborne platform (112), the surface-based platform comprising:

a phased array (104) of antennas;

a surface-based communications interface (106) configured to communicate with the airborne platform, and

at least one processor (108) configured to generate, based on position information communicated via the surface-based communications interface, control signals for the phased array to transmit a beam of radio waves towards a reflectarray of the airborne platform, and to process reflected radio waves received via the phased array.

14. An airborne platform (112) of a RADAR system (100) comprising the airborne platform and a surface-based platform (102), the airborne platform comprising:

a reflectarray (114) configured to receive and direct a beam of radio waves transmitted by a phased array of the surface-based platform and/or reflected from an object (124);

an airborne communications interface (116) configured to communicate with the surface-based platform, and

at least one processor (118) configured to output, based on position information communicated via the airborne communications interface, control signals for directing the reflectarray.

15. A computer-implemented method of operating a RADAR system comprising a surface-based platform and an airborne platform, the method comprising:

communicating (202, 204; 302; 402) position information between the surface-based platform and the airborne platform;

generating, by the surface-based platform based on the position information, control signals for a phased array of antennas to transmit (206; 306; 404) a beam of radio waves towards a reflectarray of the airborne platform;

receiving, at the reflectarray of the airborne platform, the beam transmitted from the phased array of the surface-based platform;

outputting (306), by the airborne platform based on the position information, control signals for directing the reflectarray;

directing the received beam from the reflectarray of the airborne platform;

receiving, at the reflectarray of the airborne platform, a reflected beam reflected from an object and directing the reflected beam back towards the phased array of the surface-based platform;

receiving (208; 306; 406), at the phased array of the surface-based platform, the reflected beam from the reflectarray, and

performing processing, by at least one processor of the surface-based platform, based on the reflected beam.

Fig. 1

From Airborne Platform 112

202 | Position and orientation information

To Airborne Platform 112

204 | Beam pointi`ng angle commands

RADAR 104 Tx

206

RADAR 104 Rx

208

Time

Fig. 2

To Airborne Platform 112

302 | Beam pointing request

Onboard Airborne Platform 112

304 | Beam pointing calculated from known position and orientation

RADAR 104 Tx

306

RADAR 104 Rx

308

Time

Fig. 3

From Airborne Platform 112

402 | Beam pointing angle updates

RADAR 104 Tx

404

RADAR 104 Rx

406

Time

Fig. 4

Europäisches
Patentamt
European
Patent Office
Office européen
des brevets

## EUROPEAN SEARCH REPORT

**Application Number**

EP 25 27 5004

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/171239 A1 (WANG JIBING [US] ET AL) 23 May 2024 (2024-05-23) * Paragraphs 100-102,20,24,33,34,37-39,41-43,49,51,53,56,60,61,69,75,97-99; figures 1,2,3,4,5,8 * ----- | 1-10, 12-15 | INV. G01S13/933 G01S13/02 |
| A | US 2022/070871 A1 (TANG HAI [CN] ET AL) 3 March 2022 (2022-03-03) * paragraphs [0096] - [0097], [0101] - [0160]; figures 12-18 * ----- | 1-15 | |

**TECHNICAL FIELDS SEARCHED      (IPC)**

G01S

The present search report has been drawn up for all claims

| Place of search | Date of completion of the search | Examiner |
|---|---|---|
| Munich | 13 June 2025 | Metz, Carsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 27 5004

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | | | Publication date | Patent family member(s) | | Publication date |
|---|---|---|---|---|---|---|
| US 2024171239 | A1 | | 23-05-2024 | CN | 116998116 A | 03-11-2023 |
| | | | | EP | 4292221 A1 | 20-12-2023 |
| | | | | US | 2024171239 A1 | 23-05-2024 |
| | | | | WO | 2022213000 A1 | 06-10-2022 |
| US 2022070871 | A1 | | 03-03-2022 | AU | 2016432994 A1 | 04-07-2019 |
| | | | | BR | 112019012941 A2 | 10-12-2019 |
| | | | | CA | 3047346 A1 | 28-06-2018 |
| | | | | CN | 110089170 A | 02-08-2019 |
| | | | | CN | 112584522 A | 30-03-2021 |
| | | | | EP | 3547771 A1 | 02-10-2019 |
| | | | | IL | 267415 A | 29-08-2019 |
| | | | | JP | 7170643 B2 | 14-11-2022 |
| | | | | JP | 2020504946 A | 13-02-2020 |
| | | | | KR | 20190099219 A | 26-08-2019 |
| | | | | KR | 20250004146 A | 07-01-2025 |
| | | | | PH | 12019501456 A1 | 10-02-2020 |
| | | | | RU | 2733272 C1 | 01-10-2020 |
| | | | | TW | 201824802 A | 01-07-2018 |
| | | | | US | 2020022148 A1 | 16-01-2020 |
| | | | | US | 2022070871 A1 | 03-03-2022 |
| | | | | WO | 2018112890 A1 | 28-06-2018 |
| | | | | ZA | 201904039 B | 28-04-2022 |

EPO FORM P0459

For more details about this annex : see Official Journal of the European Patent Office, No. 12/82